# EUROPÄISCHE PATENTANMELDUNG

(11) **EP 1 808 076 A2**
(43) Veröffentlichungstag der Anmeldung: **18.07.2007**
(21) Anmeldenummer: 06026372.0
(22) Anmeldetag: 19.12.2006
(51) Int. Cl.: A23B 4/28, A23L 3/00, A23B 4/26

(54) **Verfahren und Vorrichtung zur Behandlung von Lebensmittelprodukten**

(30) Priorität: 11.01.2006 DE 102006001341
(71) Anmelder: Schröder Maschinenbau KG, 33824 Werther (DE)
(72) Erfinder: Grosse-Butenuth, Christian, 33803 Steinhagen (DE)
(74) Vertreter: Wiebusch, Manfred

(57) **Zusammenfassung**

Verfahren zur Behandlung von Lebensmittelprodukten (12), bei dem die Masse der zu behandelnden Lebensmittelprodukte gemessen wird und eine auf die gemessene Masse abgestimmte Menge einer Flüssigkeit in die Lebensmittelprodukte injiziert wird, dadurch gekennzeichnet, daß die Masse der Lebensmittelprodukte (12) radiometrisch in mindestens einer Meßstation (16; 18) bestimmt wird.

## Beschreibung

Die Erfindung betrifft ein Verfahren zur Behandlung von Lebensmittelprodukten, bei dem die Masse der zu behandelnden Lebensmittelprodukte gemessen wird und eine auf die gemessene Masse abgestimmte Menge einer Flüssigkeit in die Lebensmittelprodukte injiziert wird, sowie eine Vorrichtung zur Durchführung eines solchen Verfahrens. Insbesondere befaßt sich die Erfindung mit einem Verfahren und einer Vorrichtung zum Pökeln von Fleischprodukten.

Aus DE 34 20 019 C2 ist ein Verfahren dieser Art bekannt, bei dem die Fleischprodukte vor und nach der Injektion von Pökellake mit einer mechanischen Waage gewogen werden, so daß sich der durch die Injektion der Pökellake erreichte Massenzuwachs bestimmen und dann der Injektionsprozeß so einstellen läßt, daß die Fleischprodukte, bezogen auf ihre Masse, jeweils die richtige Menge an Pökellake erhalten.

DE 692 13 487 T2 beschreibt ein Injektionsverfahren, bei dem die Lebensmittelprodukte vor und nach der Injektion mit Hilfe von mechanischen Durchlaufwaagen gewogen werden.

Durch das mechanische Wiegen der Lebensmittelprodukte läßt sich jedoch nur eine begrenzte Genauigkeit erreichen. Nachteilig ist außerdem, daß sich die Waagen mit ihren Wägetischen nur mit relativ großem Aufwand in eine Produktionsanlage integrieren lassen, in der die Lebensmittelprodukte kontinuierlich durch die verschiedenen Bearbeitungs- und Meßstationen transportiert werden. Insbesondere wird der Wägetisch bei der Aufgabe der Lebensmittelprodukte in Schwingungen versetzt, die die Meßgenauigkeit weiter beeinträchtigen und/oder die Meßzeit verlängern.

Aufgabe der Erfindung ist es deshalb, ein Verfahren zur Behandlung von Lebensmittelprodukten zu schaffen, das eine genauere und effiziente Dosierung der injizierten Flüssigkeitsmenge in Abhängigkeit von der Masse der Lebensmittelprodukte ermöglicht.

Diese Aufgabe wird bei einem Verfahren der eingangs genannten Art dadurch gelöst, daß die Masse der Lebensmittelprodukte radiometrisch bestimmt wird.

Bei dem als solches bekannten radiometrischen Meßverfahren werden die Meßobjekte, hier also die Lebensmittelprodukte, mit radioaktiver Strahlung, beispielsweise mit Gammastrahlung durchstrahlt, und aus der gemessenen Strahlungsabsorption wird dann anhand der bekannten Absorptionsfähigkeit der Produkte für die betreffende Strahlung die Masse der Produkte bestimmt. Es hat sich gezeigt, daß durch dieses Verfahren die Masse von Lebensmittelprodukten und insbesondere die bei der Injektion der Flüssigkeit eintretende Massenzunahme überraschend genau bestimmen läßt. Das Verfahren ist dabei äußerst störungsunanfällig gegenüber mechanischen Störungen jeglicher Art und wird auch praktisch nicht durch die spezifische Lage oder Schüttung der Lebensmittelprodukte in der radiometrischen Meßstation beeinflußt. Vorteilhaft ist dabei, daß sich die radiometrische Meßstation problemlos in eine Förderanlage einer kontinuierlich betriebenen Verarbeitungsstraße für die Lebensmittelprodukte integrieren läßt. Die für eine hinreichend genaue Messung erforderlichen Strahlungsdosen, denen die Lebensmittelprodukte bei der Messung ausgesetzt werden, sind unter dem Gesichtspunkt der Gesundheit und der Strahlensicherheit unbedenklich.

Das Verfahren eignet sich für Lebensmittelprodukte jeglicher Art, insbesondere für Schweinefleisch, Geflügelfleisch, Geflügelteile wie z.B. Flügel, Keulen und dergleichen sowie z.B. auch zur Injektion von Laab oder Pilz-Impflösungen in Käse. Die Lebensmittelprodukte können dabei beispielsweise auch Knochen enthalten. Die durch die Injektion der Flüssigkeit eintretende Massenzunahme, und damit die Zunahme der Strahlungsabsorption, ist von dem Knochengehalt der Produkte unabhängig. Im übrigen kann der Einfluß des für jede Produktart relativ genau bekannten Knochenanteils der Produkte auf die Strahlungsabsorption erforderlichenfalls auch rechnerisch korrigiert werden, um die absolute Masse der Produkte zu bestimmen.

Gegenstand der Erfindung ist außerdem eine Vorrichtung zur Durchführung des Verfahrens.

Vorteilhafte Ausgestaltungen und Weiterleitungen sind in den Unteransprüchen angegeben.

Bevorzugt erfolgt eine erste radiometrische Massenbestimmung vor der Injektion der Flüssigkeit und eine weitere radiometrische Massenbestimmung nach der Injektion, so daß sich die durch die Injektion der Flüssigkeit bedingte Massenzunahme genau bestimmen läßt. Die Parameter des Injektionsprozesses können dann, beispielsweise in einer geschlossenen Regelschleife, in Abhängigkeit vom Meßergebnis so eingestellt werden, daß die injizierte Flüssigkeitsmenge exakt den Vorgaben entspricht.

Bevorzugt werden die Lebensmittelprodukte mit einer Fördereinrichtung durch eine radiometrische Meßstation hindurch gefördert, in der sie einen sich quer zur Förderrichtung erstreckenden Strahlungsvorhang durchqueren. Die Strahlung, die die Lebensmittelprodukte (und den Förderer) durchquert hat, wird dann mit Hilfe eines oder mehrerer Sensoren auf einer quer zur Förderrichtung verlaufenden Linie gemessen, und aus der Differenz zwischen der gemessenen und über die Meßlinie integrierten Strahlungsintensität und der bekannten Strahlungsleistung der Strahlungsquelle läßt sich dann die Absorption berechnen. Aus der so erhaltenen Absorption kann man dann, nach Abzug der bekannten Strahlungsabsorption durch den Förderer, für jede Produktart anhand vorab vorgenommener Eichmessungen die Masse der Lebensmittelprodukte bestimmt. Spezieller wird bei einer einzelnen Messung die Masse eines scheibenförmigen Segments des oder der Lebensmittelprodukte bestimmt, das sich bei der Messung im Strahlungsvorhang befindet. Durch kontinuierliche oder periodisch wiederholte Messung läßt sich mit der jeweils gewünschten Zeitauflösung der Massendurchsatz bestimmen.

Durch Vergleich der vor und nach der Injektion erhaltenen Meßergebnisse kann der Massenzuwachs und damit die Menge der injizierten Flüssigkeit präzise bestimmt werden. Die Messung des Massenzuwachses ist dabei von der Art der Produkte weitgehend unabhängig, da die Zunahme der Strahlungsabsorption im wesentlichen nur von dem Absorptionsvermögen der injizierten Flüssigkeit abhängig ist. Darüber hinaus liefert die radiometrische Messung, die vor der Injektion stattfindet, auch ein Maß für das ursprüngliche Gewicht der Lebensmittelprodukte, so daß sich auch die bei der Injektion eintretende prozentuale Massenzunahme bestimmen und dann durch geeignete Steuerung des Injektionsprozesses nach Bedarf regeln läßt.

Um statistische Fluktuationen auszugleichen, ist es zweckmäßig, die Meßergebnisse über eine bestimmte Anzahl von Messungen, beispielsweise 1 bis 10 Messungen, während eines Zeitraums von etwa 1 - 5 Minuten zu integrieren und den so erhaltenen Mittelwert für die prozentuale Massenzunahme bei der Einstellung der Parameter des Injektionsprozesses zugrunde zu legen.

Im folgenden wird ein Ausführungsbeispiel anhand der Zeichnung näher erläutert.

Es zeigen:
- Figur 1: eine Prinzipskizze einer Pökelvorrichtung; und
- Figur 2: einen schematischen Querschnitt einer radiometrischen Meßstation.

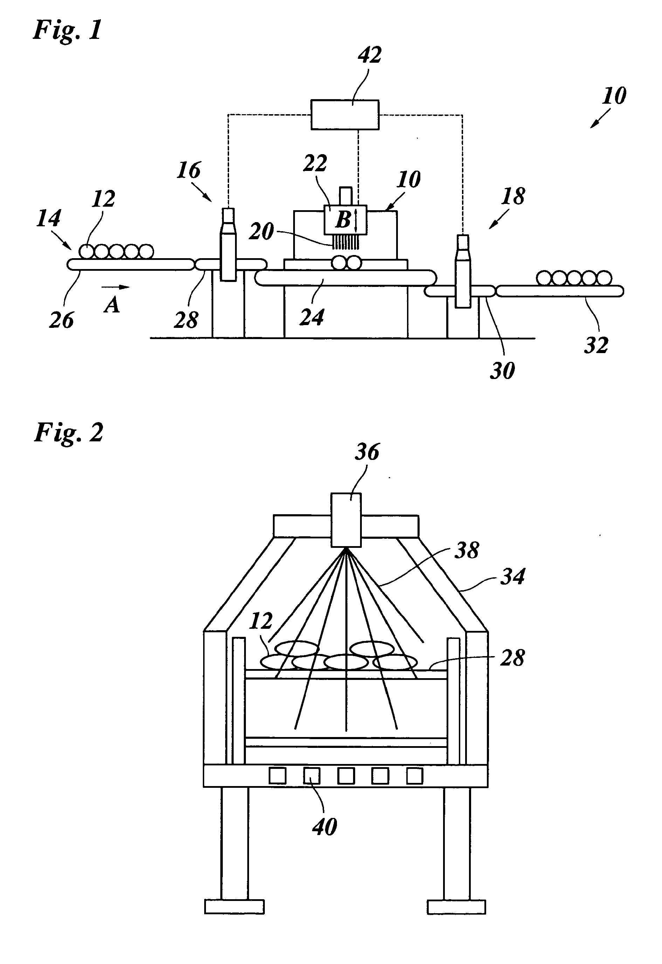

Die in Figur 1 gezeigte Pökelvorrichtung umfaßt einen Injektor 10 zur Injektion von Pökellake in Lebensmittelprodukte 12, eine Fördereinrichtung 14, mit der die Lebensmittelprodukte 12 in Richtung des Pfeils A durch den Injektor 10 hindurch transportiert werden, und zwei radiometrische Meßstationen 16, 18, von denen eine (16) in Förderrichtung vor und die andere (18) hinter dem Injektor 10 an der Fördereinrichtung (14) angeordnet ist.

Der Injektor 10, dessen prinzipieller Aufbau beispielsweise aus DE 198 27 685 C2 bekannt ist, weist einen mit Hohlnadeln 20 bestückten Nadelträger 22 auf, der vertikal, in Richtung des Doppelpfeils B, auf und ab beweglich oberhalb eines zu der Fördereinrichtung 14 gehörenden Förderbandes 24 angeordnet ist. Die Lebensmittelprodukte 12 werden auf dem Förderband 24 taktweise zugeführt, und wenn das Förderband anhält, wird der Nadelträger 22 abgesenkt, so daß die Hohlnadeln 20 in die Lebensmittelprodukte einstechen. Durch die Hohlnadeln wird dann Pökellake in die Lebensmittelprodukte injiziert. Bei gegebenem Druck und Durchsatz der Pökellake ist die in die Lebensmittelprodukte injizierte Lakemenge durch die Verweilzeit der Hohlnadeln 20 im Produkt gegeben. Der Injektionsdruck liegt beispielsweise in der Größenordnung von 0,1 bis 0,45 mPa (1-4,5 bar). Nachdem der Nadelträger 22 angehoben wurde, beginnt der nächste Arbeitstakt des Förderbandes 24, so daß neue Produkte zum Injektor zugeführt werden.

Die Fördereinrichtung 14 weist auf der stromaufwärtigen Seite, links in Figur 1, ein kontinuierlich betriebenes Förderband 26 auf, auf dem die Lebensmittelprodukte 12 zur Meßstation 16 zugeführt werden. Die Meßstation 16 enthält ein weiteres, kontinuierlich betriebenes Förderband 28, mit dem die Lebensmittelprodukte dann innerhalb der Meßstation durch einen Strahlungsvorgang hindurchgeführt werden. Danach werden die Produkte auf das taktweise arbeitende Förderband 24 übergeben.

Stromabwärts des Injektors 10 werden die Lebensmittelprodukte, in die jeweils eine bestimmte Menge an Pökellage injiziert wurde, vom Förderband 24 auf ein kontinuierlich laufendes Förderband 30 der Meßstation 18 übergeben, und nachdem die Produkte in der Meßstation 18 erneut einen Strahlungsvorhang durchquert haben, werden sie über ein Förderband 32 kontinuierlich abtransportiert.

In Figur 2 ist eine der Meßstationen, beispielsweise die Meßstation 16, in einem schematischen Querschnitt gezeigt. Das Förderband 28 ist ringsum von einem gehäuse 34 umgeben, das eine strahlungssichere Abschirmung bildet und in deren Decke sich oberhalb des Förderbandes 28 eine Strahlungsquelle 36 befindet. Diese Strahlungsquelle gibt Gammastrahlung in Form eines sich quer über das Förderband 28 erstreckenden Strahlungsvorhangsorhangs 38 auf die Lebensmittelprodukte 12 ab. Auch der Ober- und Untertrumm des Förderbandes 28 werden durchstrahlt. In der unteren Wand des Gehäuses 34 sind auf einer quer zum Förderband 28 verlaufenden Linie mehrere Sensoren 40 angeordnet, die ein Absorptionsprofil der Gammastrahlung aufnehmen, die die Lebensmittelprodukte 12 und das Förderband durchstrahlt hat. Dieses Absorptionsprofil wird über die Breite des Förderbandes integriert, so daß man nach Abzug der bekannten Absorption des Förderbandes 28 ein Maß für die Masse des Segments der Lebensmittelprodukte 12 erhält, das sich gerade im Strahlungsvorhang 38 befindet.

Das Gehäuse 34 ist in der Richtung senkrecht zur Zeichenebene in Figur 2 zumindest an den Stellen offen, an denen das Förderband 28 und die Lebensmittelprodukte ein- und austreten. Die von der Strahlungsquelle 36 abgegebene Gammastralung ist jedoch in dieser Richtung so scharf gebündelt, daß keine gesundheitsgefährdende Strahlung austritt. In einer modifizierten Ausführungsform kann anstelle eines geschlossen Gehäuses auch ein offenen Gestell vorgesehen sein. Vorzugsweise sind dann Schutzschilde oder sonstige Sperreinrichtungen so an dem Gestell angebracht, daß das Bedienungspersonal nicht mit der Hand in die strahlenbelastete Zone greifen kann.

Der Aufbau und die Funktionsweise der Meßstation 18 ist mit dem Aufbau und der Funktionsweise der oben beschriebenen Meßstation 16 identisch. Insbesondere hat der Strahlungsvorhang 38 das gleiche Profil, so daß die Massenbestimmung vor und hinter dem Injektor 10 jeweils für gleich dicke Segmente der Lebensmittelprodukte 12 erfolgt und somit die Meßresultate unmittelbar vergleichbar sind.

Die Meßresultate der Meßstationen 16 und 18 werden einer elektronischen Steuereinrichtung 42 zugeführt. Dort wird anhand der Daten der Meßstation 16 anhand der bekannten Absorptionseigenschaften der Lebensmittelprodukte 12, ggf. unter Berücksichtigung eines Knochenanteils, der Massendurchsatz berechnet, mit dem die Produkte dem Injektor 10 zugeführt werden. Durch Vergleich der Resultate der Meßstationen 16 und 18 wird außerdem der Massenzuwachs berechnet, der durch die Injektion der Pökellake eingetreten ist. Aus diesen Größen wird dann die relative, auf die Masse der Lebensmittelprodukte bezogene Massenzunahme berechnet und über mehrere, über einen Zeitraum von 1-5 Minuten verteilte Meßzyklen gemittelt. Die Betriebsparameter des Injektors 10, insbesondere die durch die Verweilzeit der Nadeln im Produkt bestimmte Lakemenge, wird dann durch die Steuereinrichtung 42 so eingestellt, daß die relative Massenzunahme mit einer Genauigkeit von beispielsweise ± 1% oder weniger auf den Sollwert geregelt wird.

Die einstellbaren Sollwerte für die relative Massenzunahme liegen dabei im Bereich von 7-80%.

Das beschriebene Verfahren erlaubt es, die Lebensmittelprodukte 12 mit einer äußerst genau dosierten Menge an Pökellake zu pökeln und erlaubt dabei eine bemerkenswert hohe Verarbeitungsgeschwindigkeit. Beispielsweise kann das Förderband 24 des Injektors 10 mit einer Taktfrequenz von 15 - 60 Takten pro Minute arbeiten, und die mittlere Fördergeschwindigkeit der Fördereinrichtung 14 kann im Bereich von 1,5 bis 9,0 m/min liegen. Bei einer Breite der Förderbänder 24-32 von 400 bis 600 mm erreicht man so je nach Produkt eine Verarbeitungskapazität von bis zu 10000 kg pro Stunde.

## Patentansprüche

1. Verfahren zur Behandlung von Lebensmittelprodukten (12), bei dem die Masse der zu behandelnden Lebensmittelprodukte gemessen wird und eine auf die gemessene Masse abgestimmte Menge einer Flüssigkeit in die Lebensmittelprodukte injiziert wird, **dadurch gekennzeichnet, daß** die Masse der Lebensmittelprodukte (12) radiometrisch bestimmt wird.

2. Verfahren nach Anspruch 1, **dadurch gekennzeichnet, daß** die Lebensmittelprodukte (12) bei der radiometrischen Messung mit Gammastrahlung durchstrahlt werden und daß die Absorption der Gammastrahlung gemessen wird.

3. Verfahren nach Anspruch 1 oder 2, **dadurch gekennzeichnet, daß** die Lebensmittelprodukte (12) mit Hilfe einer Fördereinrichtung (14) so durch eine radiometrische Meßstation (16; 18) hindurch transportiert werden, daß sie in der Meßstation einen sich quer zur Förderrichtung erstreckenden Strahlungsvorhang (38) aus radioaktiver Strahlung durchqueren.

4. Verfahren nach einem der vorstehenden Ansprüche, **dadurch gekennzeichnet, daß** eine erste radiometrische Massenbestimmung vor der Injektion der Flüssigkeit und eine zweite radiometrische Massenbestimmung nach der Injektion der Flüssigkeit erfolgt und daß anhand eines Vergleichs der Meßergebnisse die Menge der injizierten Flüssigkeit bestimmt wird.

5. Verfahren nach Anspruch 4, daß anhand einer der radiometrischen Messungen die Masse der zugeführten Lebensmittelprodukte (12) bestimmt wird und daß aus dieser Masse in Verbindung mit der Massenzunahme die auf die Produktmenge bezogene relative Massenzunahme berechnet wird.

6. Verfahren nach Anspruch 5, **dadurch gekennzeichnet, daß** die Injektion der Flüssigkeit in die Lebensmittelprodukte (12) automatisch so gesteuert wird, daß die relative Massenzunahme auf einen Sollwert geregelt wird.

7. Vorrichtung zur Behandlung von Lebensmittelprodukten, mit einem Injektor (10) zur Injektion einer Flüssigkeit in die Lebensmittelprodukte (12), und einer Fördereinrichtung (14), die die Lebensmittelprodukte durch den Injektor (10) hindurch transportiert, **dadurch gekennzeichnet, daß** an der Fördereinrichtung (14) mindestens eine radiometrische Meßstation (16; 18) zur radiometrischen Messung der Masse der Lebensmittelprodukte (12) angeordnet ist.

8. Vorrichtung nach Anspruch 7, **dadurch gekennzeichnet, daß** die radiometrische Meßstation (16; 18) von einem zu der Fördereinrichtung (14) gehörenden Förderer (28) durchlaufen wird und oberhalb des Förderers (28) eine Strahlungsquelle (36) angeordnet ist, die einen Strahlungsvorgang (38) auf die Lebensmittelprodukte (12) und den Förderer (28) richtet, und daß unterhalb des Förderers (28) mindestens ein Sensor (40) zur Messung der Strahlung angeordnet ist, die die Lebensmittelprodukte durchstrahlt hat.

9. Vorrichtung nach Anspruch 8, **dadurch gekennzeichnet, daß** mehrere Sensoren (40) über die Breite des Förderers (28) verteilt angeordnet sind.
